# EUROPEAN PATENT APPLICATION

(11) **EP 1 803 849 A2**
(43) Date of publication of application: **04.07.2007**
(21) Application number: 06125936.2
(22) Date of filing: 12.12.2006
(51) Int. Cl.: D21H 19/82, D21H 27/10, B32B 27/10, B32B 7/02, B65D 81/34

(54) **Packaging for food products and the like**

(30) Priority: 15.12.2005 IT RM20050630
(71) Applicant: Policarta S.r.l., 01030 Bassano in Teverina VT (IT)
(72) Inventor: Giusti, Arturo, 01020, Bomarzo VT (IT)
(74) Representative: Papa, Elisabetta

(57) **Abstract**

A packaging for food products, comprising a wrapping (1) receiving a bakery food product (100), said wrapping (1) having: a first coating layer (6) of polyvinyl alcohol; a second coating layer (7), external to the first layer (6), of paraffin wax impermeable to H₂O vapour, wherein the wrapping (1) loses its impermeableness to H₂O vapour if warmed up at a temperature higher than a predetermined threshold, so that by virtue of the first (6) and second (7) layer the food product (100) may be preserved in the wrapping (1) without deteriorating and may then be baked or warmed up while still packaged in the wrapping (1) itself.

## Description

The present invention refers to a packaging for food products, and in particular for bakery products, of the type consisting of an external wrapping that wraps the product itself, as well as to the product thus packaged and to a continuous web for obtaining said wrapping.

The frenzied pace of modem life has led to the ever more evident success of ready dishes requiring merely a warming up or a baking by the end consumer, like, e.g., frozen foods.

Said ready dishes entail remarkable problems, still partially unsolved with concern to their packaging modes.

In particular, above all in the case of foods already baked, the packaging should be such as to prevent undesired gaseous exchanges with the atmosphere during the stocking or preservation of the packaged product, and in particular exchanges of Oxygen and H₂O vapour, in order not to compromise quality and organoleptic properties of the product itself.

On the contrary, at the time of baking or warming up the ready dish, the packaging has to be eliminated, just in order to allow said gaseous exchanges with the atmosphere. Hence, upon removing the packaging the product is transferred into a baking pan or other baking container. However, during these steps the product often loses its shape, breaks or anyhow risks staining the consumer. Moreover, the product may stick to the baking container, to the detriment of a full enjoyment of the product itself by the end consumer.

Hence, the technical problem set and solved by the present invention is to provide a packaging for food products overcoming the drawbacks mentioned above with reference to the known art.

Such a problem is solved by a packaging according to claim 1.

According to the same inventive concept, the present invention also refers to a continuous web according to claim 12 and to a packaged product according to claim 11.

Preferred features of the present invention are present in the dependent claims thereof. The present invention provides several relevant advantages. The main advantage lies in that the packaging allows an effective stocking or preservation of the packaged product, preventing any exchange of Oxygen or H₂O vapour with the external environment, concomitantly allowing to warm up or even bake the same product, still packaged, and ensuring in this case an effective transpiration of the product, and in particular the exchange of H₂O vapour required for an effective warming up or a satisfactory baking thereof.

Other advantages, features and the operation steps of the present invention will be made evident from the following detailed description of some embodiments thereof, given by way of example and not for limitative purposes. Reference will be made to the figures of the annexed drawings, wherein:
- Figure 1 shows a plan view of a continuous web for the forming of wrappings for food products according to a first embodiment of the invention;
- Figure 2 shows a longitudinal section of the web of Figure 1, taken along line A-A of the latter Figure;
- Figure 3 shows a step of the packaging of a food product by a wrapping obtained from the web of Figure 1;
- Figure 4 shows a perspective view referring to an example of stocking the packaged product of Figure 3;
- Figures 5 and 6 show each an exemplary view of an example of baking or warming up the product of Figure 3;
- Figure 6A shows a sectional view of a detail of the wrapping of Figure 6; and
- Figure 7 shows an example of opening the wrapping of Figure 3.

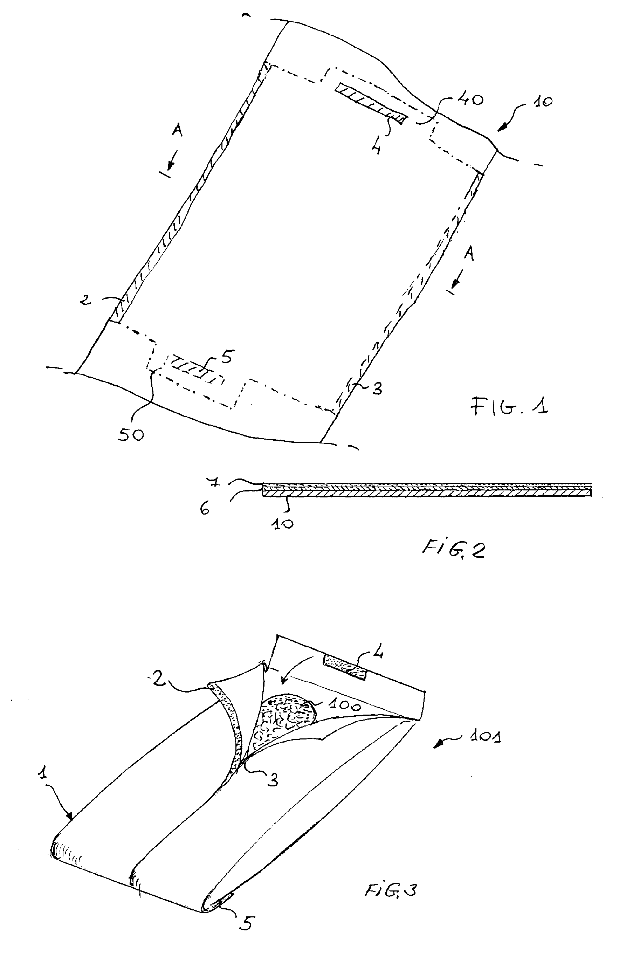

Referring initially to Figure 1, a continuous web for the forming of a packaging of a food product according to a first embodiment of the invention is generally denoted by 10. The web 10 may be formed by using as base material a laminate material, e.g. a paper material.

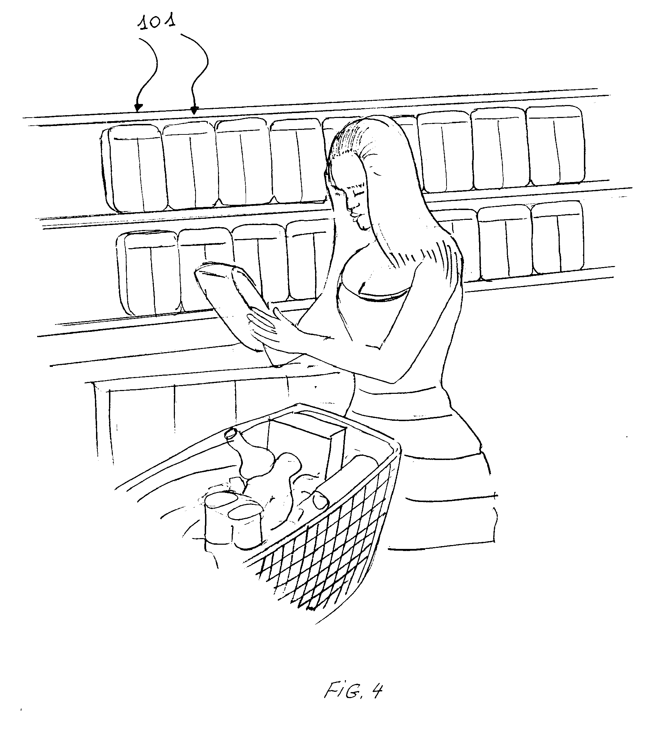

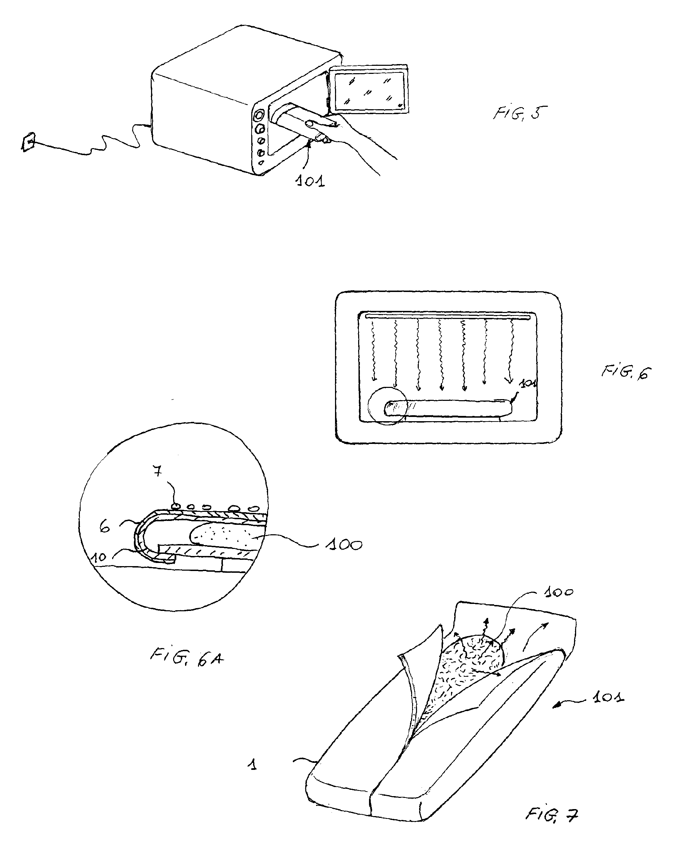

In said Figure 1, by dash-dot lines there have been denoted the cutting or die-cutting lines 10 allowing to obtain a packaging wrapping from the web itself, such a wrapping being depicted in Figure 3 and denoted by 1.

Always referring to Figure 1, the web 10 has, in correspondence of longitudinal edges thereof, lateral glue depositions aimed just at the longitudinal closure of a wrapping, as it will be illustrated in greater detail hereinafter.

In particular, in correspondence of a first face of the web 10 that is in view in Figure 1, the web itself has a first longitudinal glue deposition 2, whereas in correspondence of the opposite face, i.e. the one not in view in Figure 1, and of the other longitudinal edge, the web 10 has a second longitudinal glue deposition 3. The margin of this latter deposition has been depicted by hatching, just because it lies in correspondence of the face of the web 10 that is not in view.

The web 10 also provides, in correspondence of each of the wrappings being formed, two transversal glue depositions for the transversal closure of the wrapping. In particular, in correspondence of the face of web 10 that is in view in Figure 1 the web 10 has a first longitudinal glue deposition 4, arranged near to a transversal edge of the wrapping being formed. Likewise, in correspondence of the opposite face, i.e. that not in view in Figure 1, and of the other transversal edge, the web 10 has a second transversal glue deposition 5. The margin of the latter has been depicted by hatching due to the same reason highlighted above.

The above-described longitudinal 2, 3 and transversal 4, 5 glue depositions may be applied on the web 10 according to any known technique. In particular, the longitudinal depositions 2, 3 may have a continuous development at least in correspondence of each of the wrappings being formed, as in the example depicted, or be applied according to any one discontinuous pattern. Likewise, the depositions 2, 3 and 4, 5 may be carried out according to any one application jig, e.g. be made of a plurality of glue threads or points.

In Figure 3 there are shown the steps of forming the above-mentioned wrapping 1 from a web portion cut or die-cut according to the dash-dot lines of Figure 1. Said steps are based on the overlapping of the longitudinal edges of the web and therefore of the related glue depositions 2 and 3, so as to form a substantially tubular body. In correspondence of the transversal edges of such a tube there are two closing caps, precisely a top cap 40 on which it is applied the first transversal glue deposition 4 and a bottom cap 50 bearing the second deposition 5. Said caps 40 and 50 are folded each from a respective portion of the tubular body and closed thereon by the transversal depositions 4 and 5, thereby obtaining the wrapping 1.

As those wrapping forming steps are substantially conventional and perfectly within the reach of a person skilled in the art, this aspect will no further be dwelt upon; it is understood that any other shape or configuration of wrapping, and in general of packaging, is compatible with the present invention.

In the present embodiment, it is provided that the wrapping 1 be formed and closed on a food product 100, e.g. a roll, plain or with a filling, in the same production cycle. Always in the present embodiment, it is also provided that the food product be packaged raw.

Therefore, wrapping 1 and food product 100 generate a packaged product generally denoted by 101.

As it is shown in Figure 2, in correspondence of the face of the web 10 that will form the external portion of the wrapping 1 (in the present example the web face not in view in Figure 1) the web 10 has a two-fold coating layer. In particular, the web 10 has a first coating layer 6 of a material substantially impermeable to Oxygen and soluble in H₂O vapour, and a second coating layer 7, external to the first layer, of a material substantially impermeable to H₂O vapour and heat-sensitive. The properties of the latter coating layer 7 are such that the resulting wrapping 1 is apt to lose said impermeableness to H₂O vapour if warmed up at a temperature higher than a predetermined threshold.

Preferably, in order to better attain the advantages of the present invention, the first layer 6 comprises a polyvinyl alcohol, and the second layer 7 a paraffin wax, optionally associated to a material apt to increase the rigidity of the end wrapping, e.g. a plasticizing material.

Said layers 6 and 7 may be applied continually on the entire face of the web 10, or on selected zones thereof, in order to meet specific packaging needs.

Moreover, one or both of said coating layers 6 and 7 could also be applied directly on the wrapping 1 instead of on the web 10.

By now, it will have been appreciated that, as exemplified in Figure 4, the packaged product 101 is optimally susceptible of stocking or preservation, both on-counter and in a freezer or deep-freezer. In fact, the first layer 6, by serving as a barrier to Oxygen, prevents deterioration due to oxidizing of the product 100, whereas the second layer 7, by preventing H₂O vapour exchange, prevents drying or undesired softening of the product itself.

As indicated in Figure 5, the product 100, when it has to be consumed, may be subjected to a heat source while still packaged in the wrapping 1.

E.g., the packaged product 101 may be placed in an electric oven. As it is schematically shown in Figures 6 and 6A, the heat from the oven causes a melting of the second layer 7 of wax, thereby allowing H₂O vapour exchange between the product 100 and the outside, said exchange causing also the solution of the first layer 6, with an entailed complete gaseous exchange between outside and inside of the wrapping 1, and therefore a full and optimal baking of the product 100.

As it is shown in Figure 7, upon having completed the baking the wrapping 1 is opened and removed, and the product 100 may be enjoyed warm.

In an alternative application, the packaged product 101 may be placed in a microwave oven instead of in a traditional oven, and in this case heat will be released from the inside of the product 100 itself. H₂O vapour released from the product 100 will melt first the internal layer 6, and then heat will cause the solution of the external layer 7 as well.

The specific properties of the base material of the wrapping 1 making the latter suitable to exposure to a traditional or microwave oven are already known to a person skilled in the art; therefore this aspect will no further be dwelt upon.

It will be understood that the present invention is susceptible of several embodiments alternative to the hereto-described ones, some of which are briefly illustrated hereinafter with reference to the sole aspects differentiating them from what has already been illustrated.

First of all, the wrapping, and therefore also the continuous web from which it can be formed, may have a composite structure, it being obtained, e.g., from the union of two base material, as in the case of wrappings formed by one or more strips of paper material alternate to one or more strips of transparent film or of wrappings having windows closed with a transparent material.

Moreover, the food product may be any one bakery product or a more or less elaborate dish, to be baked or merely warmed up by the end consumer.

Furthermore, even though the invention has been described with reference to a packaging that is placed in an oven by the end consumer of the food product, alternative embodiments could envisage that the same advantages be exploited for the baking or the warming up of the same product at an industrial level.

The present invention has hereto been described with reference to preferred embodiments thereof. It is understood that other embodiments might exist, all falling within the concept of the same invention, and all comprised within the protective scope of the claims hereinafter.

## Claims

1. A packaging for food products, comprising a wrapping (1) apt to receive a food product (100) to be baked or warmed up, said wrapping (1) having:
- a first coating layer (6) of a material substantially impermeable to Oxygen and soluble in H₂O vapour; and
- a second coating layer (7), external to said first layer (6), of a material substantially impermeable to H₂O vapour and apt to lose said impermeableness if warmed up at a temperature higher than a predetermined threshold,
so that by virtue of said first (6) and second (7) layer the food product (100) can be preserved in said wrapping (1) without deteriorating and can then be baked or warmed up at a temperature higher than said threshold while still packaged in the wrapping (1) itself.

2. The packaging according to claim 1, wherein said first layer (6) comprises a polyvinyl alcohol.

3. The packaging according to claim 1 or 2, wherein said second layer (7) comprises a wax.

4. The packaging according to the preceding claim, wherein said second layer (7) comprises a paraffin wax.

5. The packaging according to any one of the preceding claims, wherein said second layer (7) comprises a material apt to increase the rigidity of said wrapping (1).

6. The packaging according to the preceding claim, wherein said second layer (7) comprises a plasticizer material.

7. The packaging according to any one of the preceding claims, wherein said wrapping (1) is at least partly made of a paper material.

8. The packaging according to any one of the preceding claims, which is a packaging for a bakery product (100).

9. The packaging according to any one of the preceding claims, which is apt to be placed in a traditional or microwave oven for the baking or the warming up of the food product (100).

10. The packaging according to any one of the preceding claims, which is apt to be frozen or deep-frozen.

11. A packaged product (101), comprising a packaging according to any one of the preceding claims and a food product (100) to be baked or warmed up received therein.

12. A continuous web (10) for the forming of wrappings (1) apt to contain food products (100) to be baked or warmed up, said web (10) having, in correspondence of a face thereof apt to form the external portion of the wrappings:
- a first coating layer (6) of a material substantially impermeable to Oxygen and soluble in H₂O vapour; and
- a second coating layer (7), external to said first layer (6), of a material substantially impermeable to H₂O vapour and apt to lose said impermeableness if warmed up at a temperature higher than a predetermined threshold,
so that by virtue of said first (6) and second (7) layer the food products (100) packaged in the wrappings (1) can be preserved in the wrappings (1) themselves without deteriorating, and can then be baked or warmed up at a temperature higher than said threshold while still packaged in the wrappings (1).

13. The continuous web (10) according to the preceding claim, having glue depositions (2, 3, 4, 5) for the closure of the wrappings (1).

14. The continuous web (10) according to claim 12 or 13, at least partly made of a paper material.

15. The continuous web (10) according to any one of the claims 12 to 14, wherein said first layer (6) comprises a polyvinyl alcohol.

16. The continuous web (10) according to any one of the claims 12 to 15, wherein said second layer (7) comprises a wax.

17. The continuous web (10) according to the preceding claim, wherein said second layer (7) comprises a paraffin wax.

18. The continuous web (10) according to any one of the claims 12 to 17, wherein said second layer (7) comprises a material apt to increase the rigidity of said wrapping (1).

19. The continuous web (10) according to the preceding claim, wherein said second layer (7) comprises a plasticizer material.

20. The continuous web (10) according to any one of the claims 12 to 19, suitable for the forming of a wrapping (1) according to any one of the claims 1 to 10.
